# EUROPEAN PATENT APPLICATION

(11) **EP 3 633 513 A1**
(43) Date of publication of application: **08.04.2020**
(21) Application number: 18850973.1
(22) Date of filing: 22.08.2018
(51) Int. Cl.: G06F 11/32, G06F 3/16, G06F 3/02

(54) **HOME APPLIANCE AND CONTROL METHOD THEREFOR**

(30) Priority: 31.08.2017 KR 20170111395
(71) Applicant: Samsung Electronics Co., Ltd., Suwon-si, Gyeonggi-do 16677 (KR)
(72) Inventor: JEON, Seol-hee, Suwon-si Gyeonggi-do, 16677 (KR); KIM, Hwa-sung, Suwon-si, Gyeonggi-do, 16677 (KR); YANG, Hee-kyung, Suwon-si Gyeonggi-do, 16677 (KR); CHUN, Eun-jin, Suwon-si Gyeonggi-do, 16677 (KR); HWANG, Soon-hoon, Suwon-si, Gyeonggi-do, 16677 (KR); LEE, Ji-eun, Suwon-si Gyeonggi-do, 16677 (KR); CHOI, Wung-chul, Suwon-si Gyeonggi-do, 16677 (KR)
(74) Representative: Walaski, Jan Filip
(86) International application number: PCT/KR2018/009681
(87) International publication number: WO 2019/045358

(57) **Abstract**

A home appliance is provided. The home appliance includes at least one light emitting diode (LED) for individually displaying each of selected states of at least one function provided by the home appliance, and a processor for controlling, based on a user voice being inputted, the at least one LED so as to indicate that the inputted voice is being recognized, and based on the voice recognition being completed, controlling the at least one LED so as to allow the at least one LED to be turned on according to the voice recognition.

## Description

### [Technical Field]

The disclosure relates to a home appliance and a control method therefor, and more particularly, to a home appliance that provides a feedback for a voice command by using a light emitting diode (LED) provided on the home appliance and a control method therefor.

### [Background Art]

Spurred by the development of electronic technologies, various types of home appliances are being developed and distributed. As examples of home appliances that are commonly distributed in homes, there are washing machines, dryers, air conditioners, electric ranges, microwave ovens, ovens, refrigerators, air purifiers, etc.

Meanwhile, home appliances as above are not mainly aimed at a display function, and thus they did not include separate display panels in many cases. Home appliances that did not include display panels, or home appliances that included display panels but the display panels were in sizes appropriate for displaying a small amount of information generally guided the states, operations, etc. of the home appliances with separate LED lights.

Meanwhile, recently, technologies using voice recognition were being developed for controlling electronic devices more conveniently and intuitively, and home appliances equipped with a voice recognition function were being distributed actively.

However, in the case of a home appliance which does not include a display panel, or which does not include a display panel in a sufficient size, there was no proper method for guiding the state and operation of voice recognition. Accordingly, there were many cases wherein a user hesitated to use a voice recognition function, or did not use a voice recognition function at all.

### [Detailed Description of the Invention]

### [Technical Problem]

The disclosure was devised related to solving the aforementioned problem, and the purpose of the disclosure is in providing a home appliance that provides a feedback for a voice command by using an LED provided on the home appliance and a control method therefor.

### [Technical Solution]

A home appliance according to an embodiment of the disclosure for achieving the aforementioned purpose includes at least one light emitting diode (LED) for individually displaying each of selected states of at least one function provided by the home appliance and a processor for controlling, based on a user voice being inputted, the at least one LED so as to indicate that the inputted voice is being recognized, and based on the voice recognition being completed, controlling the at least one LED so as to allow the at least one LED to be turned on according to the voice recognition.

In this case, a home appliance according to an embodiment of the disclosure may further include a manipulation member for receiving selection of at least one function provided by the home appliance.

Meanwhile, the home appliance may include a plurality of LEDs including the at least one LED, and the processor may sequentially turn on at least two LEDs among the plurality of LEDs or flicker at least one LED among the plurality of LEDs so as to indicate that the inputted voice is being recognized.

Meanwhile, the processor may control the at least one LED to indicate an error state, a self-diagnosis state, or a software upgrade state of the home appliance.

Meanwhile, the home appliance may be a washing machine, and the at least one LED may individually display a selected state of at least one washing function.

Meanwhile, the manipulation member may be a jog wheel, and the at least one LED may be arranged in the form of surrounding the jog wheel.

Meanwhile, the home appliance according to an embodiment of the disclosure may further include a communicator communicating with an external server for voice recognition, and the processor may transmit a voice signal corresponding to the inputted voice to the external server through the communicator and receive a voice recognition result from the external server.

In this case, the processor may control the at least one LED to indicate that the inputted voice is being recognized while waiting for a voice recognition result from the external server.

Meanwhile, the processor may, based on a predetermined event occurring, initiate a voice recognition mode, and control the at least one LED to indicate that a voice recognition mode was initiated.

In this case, the predetermined event may be an event wherein a user voice including a predetermined call word is inputted or an event wherein a specific button provided on the home appliance is selected.

Meanwhile, the processor may control the at least one LED to indicate that the voice recognition mode was initiated by a lighting method different from a lighting method indicating that a voice is being recognized.

Meanwhile, the home appliance according to an embodiment of the disclosure may further include a microphone, and the processor may, based on a user voice being inputted through the microphone, control the at least one LED to indicate that the inputted voice is being recognized.

Meanwhile, the home appliance according to an embodiment of the disclosure may further include a speaker, and the processor may output voice guidance corresponding to the voice recognition through the speaker.

In this case, the processor may turn on LEDs in a number corresponding to the volume level of the speaker among the at least one LED.

Meanwhile, the home appliance may be a washing machine, a dryer, an air conditioner, an electric range, a microwave oven, an oven, a refrigerator, or an air purifier.

Meanwhile, a control method for a home appliance including at least one LED for individually displaying each of selected states of at least one function includes the steps of, based on a user voice being inputted, displaying that the inputted voice is being recognized by using the at least one LED, performing voice recognition, and based on the voice recognition being completed, controlling the at least one LED so as to allow the at least one LED to be turned on according to the voice recognition.

In this case, the home appliance may include a plurality of LEDs including the at least one LED, and in the displaying step, at least two LEDs among the plurality of LEDs may be sequentially turned on or at least one LED among the plurality of LEDs may be flickered so as to indicate that the inputted voice is being recognized.

Meanwhile, the control method for a home appliance according to an embodiment of the disclosure may further include the step of controlling the at least one LED to indicate an error state, a self-diagnosis state, or a software upgrade state of the home appliance.

Meanwhile, the step of performing voice recognition may include the steps of transmitting a voice signal corresponding to the inputted voice to an external server for voice recognition and receiving a voice recognition result from the external server.

Meanwhile, a voice recognition system according to an embodiment of the disclosure may include at least one LED for individually displaying each of selected states of at least one function, a home appliance which, based on receiving input of a user voice, transmits a voice signal corresponding to the inputted voice to a server, and a server which transmits a voice recognition result corresponding to the voice signal received from the home appliance to the home appliance. The home appliance controls the at least one LED to indicate that the inputted voice is being recognized while waiting for a voice recognition result from the server, and controls lighting of the at least one LED according to the voice recognition result received from the server.

### [Brief Description of Drawings]

FIG. 1 is a block diagram for illustrating a configuration of a home appliance according to an embodiment of the disclosure;
FIG. 2 is a diagram for illustrating a plurality of LEDs included in a home appliance according to various embodiments of the disclosure;
FIG. 3 is a diagram for illustrating a plurality of LEDs included in a home appliance according to various embodiments of the disclosure;
FIG. 4 is a diagram for illustrating a plurality of LEDs included in a home appliance according to various embodiments of the disclosure;
FIG. 5A is a diagram for illustrating a voice recognition server according to an embodiment of the disclosure;
FIG. 5B is a diagram for illustrating a voice recognition method according to an embodiment of the disclosure;
FIG. 6 is a diagram for illustrating a LED lighting method for a home appliance according to various embodiments of the disclosure;
FIG. 7 is a diagram for illustrating a LED lighting method for a home appliance according to various embodiments of the disclosure;
FIG. 8 is a diagram for illustrating a LED lighting method for a home appliance according to various embodiments of the disclosure;
FIG. 9 is a diagram for illustrating an initiating method for a voice recognition mode according to an embodiment of the disclosure;
FIG. 10 is a diagram for illustrating an example of a method for indicating that a voice recognition mode was initiated;
FIG. 11 is a diagram for illustrating an example of an operation according to a voice command of a home appliance according to an embodiment of the disclosure;
FIG. 12 is a diagram for illustrating a volume adjusting method for a home appliance according to an embodiment of the disclosure;
FIG. 13A is a diagram for illustrating various examples of a voice control method in case a home appliance is a washing machine;
FIG. 13B is a diagram for illustrating various examples of a voice control method in case a home appliance is a washing machine;
FIG. 13C is a diagram for illustrating various examples of a voice control method in case a home appliance is a washing machine;
FIG. 13D is a diagram for illustrating various examples of a voice control method in case a home appliance is a washing machine;
FIG. 14A is a diagram for illustrating various examples of a voice control method in case a home appliance is a washing machine;
FIG. 14B is a diagram for illustrating various examples of a voice control method in case a home appliance is a washing machine;
FIG. 15A is a diagram for illustrating various examples of a voice control method in case a home appliance is an oven;
FIG. 15B is a diagram for illustrating various examples of a voice control method in case a home appliance is an oven;
FIG. 15C is a diagram for illustrating various examples of a voice control method in case a home appliance is an oven;
FIG. 15D is a diagram for illustrating various examples of a voice control method in case a home appliance is an oven;
FIG. 15E is a diagram for illustrating various examples of a voice control method in case a home appliance is an oven;
FIG. 15F is a diagram for illustrating various examples of a voice control method in case a home appliance is an oven;
FIG. 15G is a diagram for illustrating various examples of a voice control method in case a home appliance is an oven;
FIG. 15H is a diagram for illustrating various examples of a voice control method in case a home appliance is an oven;
FIG. 16 is a block diagram for illustrating a configuration of a home appliance according to another embodiment of the disclosure;
FIG. 17 is a flow chart for illustrating a control method for a home appliance according to various embodiments of the disclosure;
FIG. 18 is a flow chart for illustrating a control method for a home appliance according to various embodiments of the disclosure; and
FIG. 19 is a flow chart for illustrating a control method for a home appliance according to various embodiments of the disclosure.

### [Best Mode for Implementing the Disclosure]

First, the terms used in this specification will be described briefly, and then the disclosure will be described in detail.

As terms used in the embodiments of the disclosure, general terms that are currently used widely were selected as far as possible, in consideration of the functions described in the disclosure. However, the terms may vary depending on the intention of those skilled in the art, previous court decisions, or emergence of new technologies. Also, in particular cases, there may be terms that were arbitrarily designated by the applicant, and in such cases, the meaning of the terms will be described in detail in the relevant descriptions in the disclosure. Thus, the terms used in the disclosure should be defined based on the meaning of the terms and the overall content of the disclosure, but not just based on the names of the terms.

Further, various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents or alternatives of the embodiments included in the ideas and the technical scopes disclosed herein. Meanwhile, in case it is determined that in describing embodiments, detailed explanation of related known technologies may unnecessarily confuse the gist of the disclosure, the detailed explanation will be omitted.

In addition, terms such as "first," "second" and the like may be used to describe various elements, but the terms are not intended to limit the elements. Such terms are used only to distinguish one element from another element.

Meanwhile, singular expressions also include plural expressions as long as they do not mean obviously differently in the context. In addition, in this specification, terms such as "include" and "consist of' should be construed as designating that there are such characteristics, numbers, steps, operations, elements, components or a combination thereof described in the specification, but not as excluding in advance the existence or possibility of adding one or more of other characteristics, numbers, steps, operations, elements, components or a combination thereof.

Also, in the embodiments of the disclosure, 'a module' or 'a unit' may perform at least one function or operation, and may be implemented as hardware or software, or as a combination of hardware and software. Further, a plurality of 'modules' or 'units' may be integrated into at least one module and implemented as at least one processor, excluding 'a module' or 'a unit' that needs to be implemented as specific hardware.

Hereinafter, the embodiments of the disclosure will be described in detail with reference to the accompanying drawings, such that those having ordinary skill in the art to which the disclosure belongs can easily carry out the disclosure. However, it should be noted that the disclosure may be implemented in various different forms, and is not limited to the embodiments described herein. Also, in the drawings, parts that are not related to explanation were omitted, for explaining the disclosure clearly, and throughout the specification, similar components were designated by similar reference numerals.

Hereinafter, the disclosure will be described in more detail with reference to the drawings.

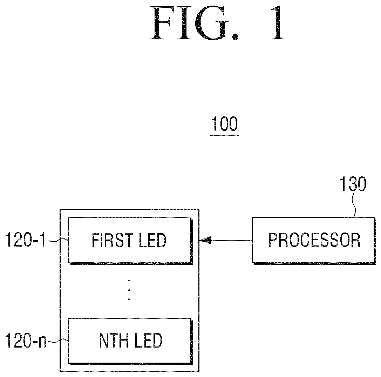

FIG. 1 is a diagram for illustrating a configuration of a home appliance according to an embodiment of the disclosure.

The home appliance 100 includes at least one LED 120-1 to 120-n and a processor 130. In FIG. 1, in case the home appliance 100 includes a plurality of LEDs, n means a number bigger than or equal to 2, and in case the home appliance 100 includes one LED, the nth LED 120-n may be omitted.

The home appliance 100 may be an electronic device such as a washing machine, a dryer, an air conditioner, an electric range, a microwave oven, an oven, a refrigerator, and an air purifier.

Each of the at least one LED 120-1 to 120-n may emit light of one color, or may emit light of various colors, and may have one type of brightness or various types of brightness.

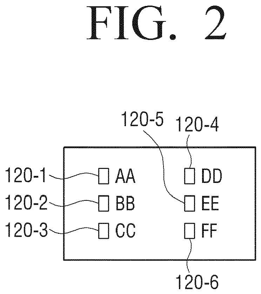

Also, the at least one LED 120-1 to 120-n may be implemented in various forms according to the type, the manipulation method, etc. of the home appliance 100, and some examples of them were illustrated in FIGS. 2 to 4.

FIG. 2 illustrates some areas wherein a plurality of LEDs 120-1 to 120-6 are arranged in the home appliance 100 according to an embodiment of the disclosure.

Referring to FIG. 2, the electronic device 100 may include a plurality of LEDs 120-1 to 120-6, and the plurality of LEDs 120-1 to 120-6 may individually display each of selected states of a plurality of functions provided by the home appliance 100. Here, the term function has meaning inclusive of terms like a menu, a mode (state), an option, a setting, etc. For example, in case the home appliance 100 is a washing machine, the home appliance 100 provides power turning-on/turning-off functions, a washing reservation function, a washing function, a spin-drying function, etc., and for example, in a washing function, the home appliance 100 provides subordinate functions such as a water temperature adjusting function, a washing time adjusting function, etc. All of the superordinate functions and the subordinate functions as above will be referred to as functions.

For example, in case an AA function provided by the home appliance 100 is selected, the processor 130 may turn on the first LED 120-1. Afterwards, in case selection for the AA function is released, the processor 130 may turn off the first LED 120-1. In case a plurality of functions are selected simultaneously, a plurality of LEDs may be turned on simultaneously. For example, in case an AA function, a BB function, and a CC function are selected, the processor 130 may simultaneously turn on the first LED 120-1, the second LED 120-2, and the third LED 120-3. By a method as above, selected states of functions may be displayed.

In case the home appliance 100 is a washing machine, the plurality of LEDs 120-1 to 120-7 may individually display selected states of a plurality of different washing functions. For example, the AA function may be a blanket washing function, and the BB function may be a baby clothes washing function.

Meanwhile, the home appliance 100 may further include a manipulation member for receiving input of a user manipulation. Through the manipulation member, a user may select at least one function provided by the home appliance 100. The manipulation member may be implemented as various forms such as a button, a touch pad, a jog wheel, etc., and a combination of the various forms.

The at least one LED 120-1 to 120-n may be arranged in association with the manipulation member of the home appliance 100. For example, the at least one LED 120-1 to 120-n may be arranged in a location corresponding to at least one button of the manipulation member. As another example, in case the manipulation member is a jog wheel, the at least one LED 120-1 to 120-n may be arranged in the form of surrounding the manipulation member.

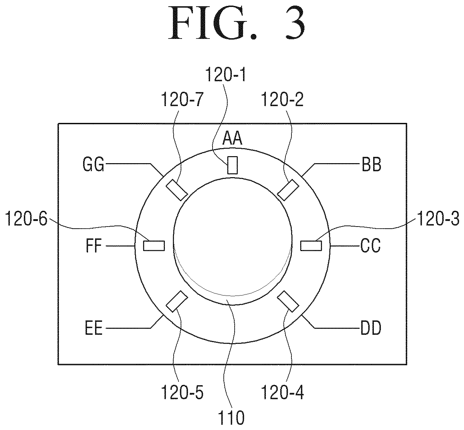

FIG. 3 illustrates the arrangement form of the plurality of LEDs 120-1 to 120-7 in the home appliance 100 according to an embodiment of the disclosure, and illustrates an example wherein the plurality of LEDs 120-1 to 120-7 are arranged to surround the manipulation member 110 in the form of a jog wheel.

Referring to FIG. 3, the plurality of LEDs 120-1 to 120-7 may be arranged around the manipulation member 110 in the form of a jog wheel at a specific distance. A user may select a desired function by rotating the manipulation member 110. Also, as the manipulation member 110 is rotated, an LED corresponding to the selected function may be turned on.

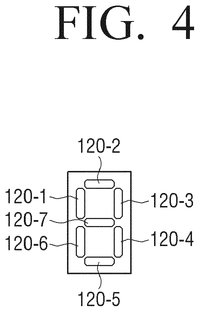

FIG. 4 illustrates some areas wherein the plurality of LEDs 120-1 to 120-7 are arranged in the home appliance 100 according to an embodiment of the disclosure.

Referring to FIG. 4, the plurality of LEDs 120-1 to 120-7 may constitute a flexible numeric display (FND). An FND is preferably used mainly for expressing numbers or simple symbols, and is also referred to as a 7 segment. 7 segments may be classified into common cathode types and common anode types. The processor 130 may individually turn on the plurality of LEDs 120-1 to 120-7 and display specific numbers or specific characters, and thereby indicate that a specific function has been selected.

The processor 130 is a component that can control the overall operations of the home appliance 100, and may include, for example, a CPU, an MPU, a GPU, a DSP, etc., and may also include a RAM, a ROM, and a system bus. Also, the processor 130 may be implemented as a MICOM, an ASIC, etc.

The processor 130 may indicate information on the state of the home appliance 100 by turning on or turning off each of the at least one LED 120-1 to 120-n. For example, if a specific function of the home appliance 100 is selected through the manipulation member provided on the home appliance 100, the processor 130 may turn on the LED corresponding to the selected function.

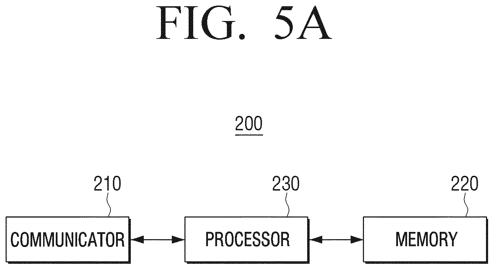

Meanwhile, the home appliance 100 according to the disclosure may be controlled by a user voice as well as a user manipulation through the manipulation member. Specifically, the home appliance 100 may perform a control operation corresponding to a user voice through communication with an external server for voice recognition. Hereinafter, more specific explanation in this regard will be made with reference to FIGS. 5A to 5B.

FIG. 5A is a block diagram for illustrating a server 200 for voice recognition according to an embodiment of the disclosure.

Referring to FIG. 5A, the server 200 includes a communicator 210, a memory 220, and a processor 230.

The communicator 210 is a component for performing communication with an external device. For example, the communicator 210 may be connected to an external device through a local area network (LAN) or an Internet network, and may perform communication with an external device by a wireless communication method (e.g., wireless communication such as Z-wave, 4LoWPAN, RFID, LTE D2D, BLE, GPRS, Weightless, Edge Zigbee, ANT+, NFC, IrDA, DECT, WLAN, Bluetooth, Wi-Fi, Wi-Fi Direct, GSM, UMTS, LTE, and WiBRO). Also, the communicator 210 may include various communication chips such as a Wi-FI chip, a Bluetooth chip, an NFC chip, and a wireless communication chip.

The communicator 210 may receive a voice signal from the home appliance 100, and may transmit response information as a result of recognition of the voice signal to the home appliance 100.

In addition, the communicator 210 may perform communication with a web server through an Internet network, and transmit various kinds of search keywords to the web server and receive a result of web search in accordance thereto.

The memory 220 may store various kinds of programs and data necessary for the operations of the server 200.

The memory 220 may be implemented as a non-volatile memory, a volatile memory, a flash-memory, a hard disk drive (HDD) or a solid state drive (SDD), etc. Meanwhile, the memory 220 may be implemented not only as a storage medium inside the server 200, but also as an external storage medium, for example, a micro SD card, a USB memory, or a web server through a network, etc.

The memory 220 may include databases for each domain. A domain means a category or a topic wherein sentences in a natural language are included, and for example, various domains divided by types of devices such as a washing machine domain, an oven domain, etc. may exist. Also, as another example, various domains divided by the topics of services provided such as a domain providing information on washing methods, a domain for searching washing courses, a domain providing information on resolving errors, etc. may exist. For example, a database related to a washing machine domain may store dialogue patterns for various situations that may occur in a washing machine. For example, as a response for "What is a blanket washing course?", the database may store "It's a course for washing blankets or bedding," and as a response for "How long does the washing have to be done?", the database may store "oo minutes left."

Also, the memory 220 may match control commands for each intention of user utterances and store the commands. For example, in case the intention of a user utterance is change of a washing mode, the memory 220 may match a control command for making a washing mode change and store the command, and in case the intention of a user utterance is reserved washing, the memory 220 may match a control command for executing a reserved washing function and store the command.

In addition, the memory 220 may include an automatic speech recognition (ASR) module and a natural language understanding (NLU) module. An ASR module is a module for converting a voice signal into a text based on an acoustic model and a language model specified for each domain. Meanwhile, an NLU module is a module for performing various types of analysis for making a system understand a converted text.

The processor 230 is a component that can control the overall operations of the server 200, and may include, for example, a CPU, a RAM, a ROM, and a system bus. Also, the processor 230 may be implemented as a MICOM, an ASIC, etc.

When a voice signal is received from the home appliance 100 through the communicator 210, the processor 230 may convert the given voice signal into a text by using an acoustic model and a language model specified for the domain to which the voice signal belongs by using an ASR module.

Specifically, the processor 230 may extract features of the voice in the given voice signal. In a feature extraction process, the processor 230 removes voice information that unnecessarily overlaps and improves consistency among the same voice signals, and at the same time, extracts information that can improve distinction from other voice signals. Such information is referred to as a feature vector. As technologies for extracting a feature vector, a linear predictive coefficient, a cepstrum, a mel frequency cepstral coefficient (MFCC), energy of each frequency band (filter bank energy), etc. may be used.

Also, the processor 230 may perform a similarity measurement and recognition process by a feature vector acquired from feature extraction. For example, vector quantization (VQ), a hidden Markov model (HMM), dynamic time warping (DTW), etc. may be used. In this case, an acoustic model which models signal features of voices and compares them for similarity measurement and recognition, and a language model which models linguistic order relations of words or syllables corresponding to recognized vocabularies are used.

In addition, the processor 230 may perform natural language understanding processing for understanding the intention of a user utterance by using an NLU module for a converted text. In natural language understanding processing, morpheme analysis, syntax analysis, dialog act, main action, and named entity analysis, etc. may be performed.

Specifically, the processor 230 may perform morpheme analysis of dividing a converted text by a unit of a morpheme which is the smallest unit having meaning and analyzing which part of speech each morpheme has. Through morpheme analysis, information on parts of speech such as a noun, a verb, an adjective, a postposition, etc. can be acquired.

Afterwards, the processor 230 may perform syntax analysis processing. Syntax analysis is dividing a user utterance with a specific standard such as a noun clause, a verb clause, an adjective clause, etc., and analyzing what kind of relation exists among each divided chunk. Through such syntax analysis, the subject, the object, and the modifiers of a user utterance can be figured out.

Then, the processor 230 may extract a dialog act, a main act, and a named entity from the converted text. Here, a dialogue act refers to an intended action of a speaker for performing the purpose of a dialogue included in an utterance, and indicates whether a user utterance is a request of an action (a request), a speaker's request of a value of a certain variable to a listener (a WH-question), or a speaker's request of an answer in YES/NO to a listener (a YN-question), a speaker's provision of information to a listener (inform), etc. Meanwhile, a main act means semantic information indicating an action desired by an utterance through a dialogue in a specific domain. For example, in a washing machine domain, a main act may include selection of a washing course, reservation of washing, etc. Also, a named entity is information added for specifying the meaning of an action intended in a specific domain.

The processor 230 may generate response information corresponding to the determined user intention from the extracted dialog act, main act, and named entity. Response information may include a control command for making the home appliance 100 perform a specific function and/or a voice signal to be outputted through the speaker of the home appliance 100.

Also, the processor 230 may generate response information based on information stored in the memory 210 in advance, and generate response information based on information searched from a web server connected through an Internet network. In addition, the processor 230 may receive state information from the home appliance 100 and generate response information based on the state information.

Further, the processor 230 may transmit the generated response information to the home appliance 100 through the communicator 210.

For example, in case the home appliance 100 is a washing machine and a voice uttered by a user is "What is a blanket washing course?", the dialogue act may be extracted as 'a WH-question,' the main act as 'guidance of a washing course,' and the named entity as 'blanket washing.' By using the dialogue act, the main act, and the named entity extracted as above, the processor 230 may generate a sentence which is "It's a course for washing blankets or bedding" based on the database of the domain to which the utterance belongs, and convert the sentence into a voice signal by using a text to speech (TTS) algorithm, and transmit response information including the converted voice signal to the home appliance 100. At the home appliance 100, the voice signal included in the response information may be outputted through the speaker.

As another example, in case the home appliance 100 is a washing machine and a voice uttered by a user is "When is the washing going to end?", the dialogue act may be extracted as 'a WH-question,' the main act as 'guidance of a washing state,' and the named entity as 'the remaining time.' By using the dialogue act, the main act, and the named entity extracted as above, the processor 230 may select "oo minutes left" as a response sentence from the database of the washing machine domain. Then, the processor 230 may request state information to the home appliance 100 and when state information is received from the home appliance 100, the processor 230 may extract information on the remaining time of washing (e.g., thirteen minutes) from the state information, and insert the information into the response sentence and generate a text which is "Thirteen minutes left." Then, the processor 230 may convert the generated text into a voice signal by applying a TTS algorithm, and transmit response information including the converted voice signal to the home appliance 100. At the home appliance 100, the voice signal included in the response information may be outputted through the speaker.

As still another example, in case the home appliance 100 is a washing machine and a voice uttered by a user is "I spilled coffee on my clothes. How should I wash it?", the dialogue act may be extracted as 'a WH-question,' the main act as 'selection of a washing course,' and the named entity as 'coffee' and 'spill.' By using the dialogue act, the main act, and the named entity extracted as above, the processor 230 may generate appropriate response information. For example, the processor 230 may generate a text which is "You can wash it in cooking and dining courses" from the database of the washing machine domain, and convert the generated text into a voice signal by using a text to speech (TTS) algorithm, and transmit response information including the voice signal to the home appliance 100. At the home appliance 100, the voice signal included in the response information may be outputted through the speaker. The server 200 may include not only the voice signal, but also a control command for making cooking and dining courses selected in the response information and transmit the information to the home appliance 100, and the home appliance 100 may select a cooking course and a dining course according to the control command. Then, the home appliance 100 may turn on the LEDs corresponding to the cooking course and the dining course and thereby inform the user that the functions have been selected.

As another example, in case the home appliance 100 is a microwave oven and a voice uttered by a user is "Defrost it quickly," the dialogue act may be extracted as 'a request,' the main act as 'selection of a cooking mode,' and the named entity as 'quick defrosting.' By using the dialogue act, the main act, and the named entity extracted as above, the processor 230 may transmit response information including a control command for selecting the cooking mode of the home appliance 100 as quick defrosting to the home appliance 100 through the communicator 210. The home appliance 100 that received the response information may select a quick defrosting mode according to the control command included in the response information, and turn on the LED corresponding to the quick defrosting mode.

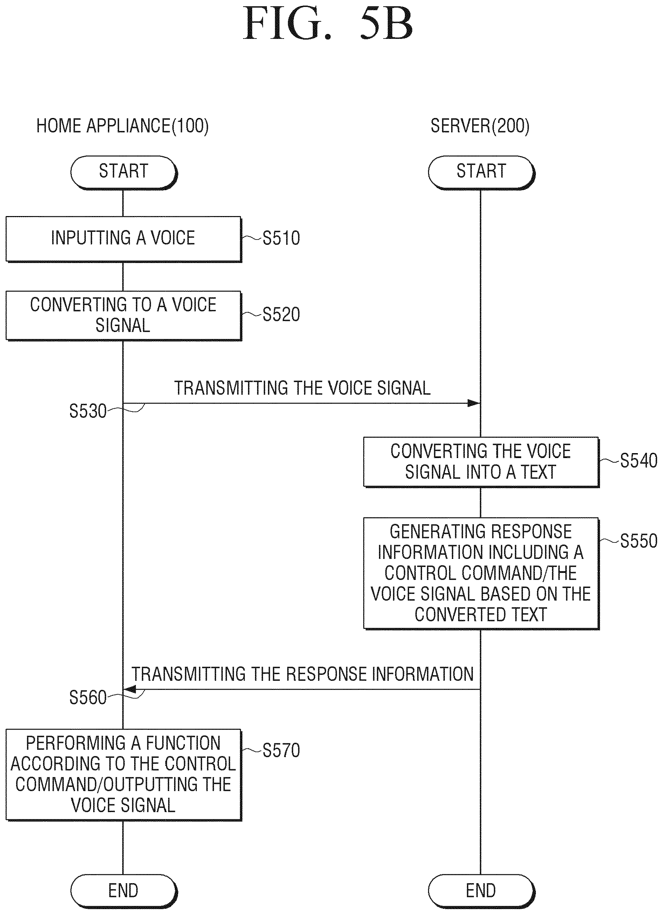

FIG. 5B is a flow chart for illustrating the voice recognition processes of the aforementioned server 200 and home appliance 100.

Referring to FIG. 5B, when a voice is inputted through a microphone provided on the home appliance 100 or a microphone provided on an external device at operation S510, the home appliance 100 converts the inputted voice into a digital voice signal at operation S520. In this case, a process of removing a noise component may be performed. Then, the home appliance 100 transmits the voice signal to the server 200 at operation S530.

The server 200 converts the voice signal received from the home appliance 100 into a text at operation S540. Specifically, the server 200 may convert the voice signal into a text by using an acoustic model and a language model through automatic speech recognition (ASR) processing as described above.

Then, the server 200 may generate response information including at least one of a control command or a voice signal based on the converted text at operation S550. Specifically, the server 200 may determine a control command matched with a text which is a converted form of the voice signal through natural language understanding (NLU) processing as described above, and generate a response text corresponding to the text. In this case, the server 200 may utilize data stored in the server 200 in advance, data searched at the web server, data collected from the home appliance 100, etc. The server 200 may convert the response text into a voice signal, and generate response information including at least one of the control command or the voice signal.

Then, the server 200 transmits the generated response information to the home appliance 100 at operation S560. In case a control command is included in the received response information, the home appliance 100 may perform a function corresponding to the control command, and in case a voice signal is included in the received response information, the home appliance 100 may output the voice signal through the speaker, and in case a control command and a voice signal are included in the received response information, the home appliance 100 may perform a function corresponding to the control command and output the voice signal through the speaker at operation S570. In this case, the home appliance 100 may perform a function corresponding to the control command and turn on the LED corresponding to the function among the at least one LED 120-1 to 120-n, and thereby inform the user that the function is performed.

Meanwhile, response information that the server 200 provides to the home appliance 100 may include a text instead of including a voice signal, and it is possible that a text is converted into a voice signal at the home appliance 100 and is outputted through the speaker. Also, the disclosure is not limited to a case wherein information provided from the server 200 is acoustically provided through the speaker, but the server 200 may provide information to be outputted visually at the home appliance 100 to the home appliance 100, and it is possible that the information is displayed through the display of the home appliance 100.

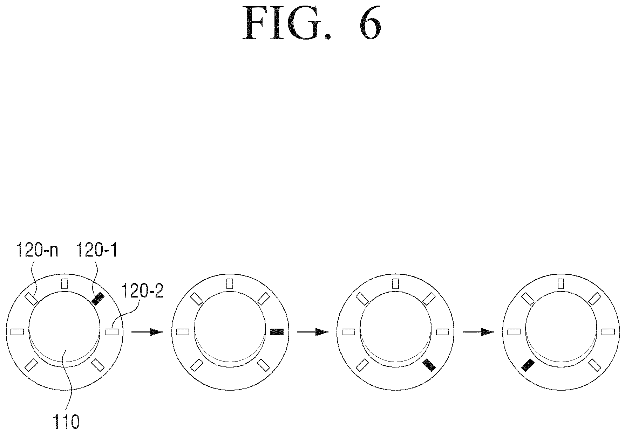

Meanwhile, while waiting for a result of voice recognition, i.e., response information from the server 200, the processor 130 of the electronic device 100 may control the at least one LED 120-1 to 120-n to display that the voice is being recognized. For example, while waiting for a result of voice recognition from the server 200, the processor 130 may control the plurality of LEDs arranged around the manipulation member in the form of a jog wheel to be turned on sequentially. An example wherein the plurality of LEDs are turned on sequentially will be described with reference to FIGS. 6 to 8.

FIG. 6 is a diagram illustrating an example wherein the plurality of LEDs 120-1 to 120-n arranged to surround the manipulation member 110 in the form of a jog wheel according to an embodiment of the disclosure are turned on sequentially.

While waiting for a recognition result from the server 200, the processor 130 may turn on the plurality of LEDs 120-1 to 120-n sequentially as illustrated in FIG. 6. Through this, a user may figure out that a voice is being recognized.

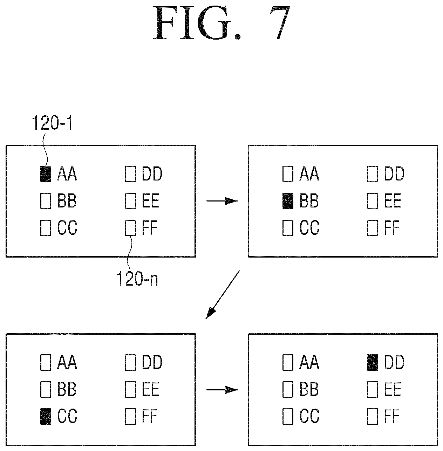

FIG. 7 illustrates a sequential lighting method according to another embodiment of the disclosure, and the processor 130 may turn on the plurality of LEDs 120-1 to 120-n sequentially as illustrated in FIG. 7 while waiting for a recognition result from the server 200.

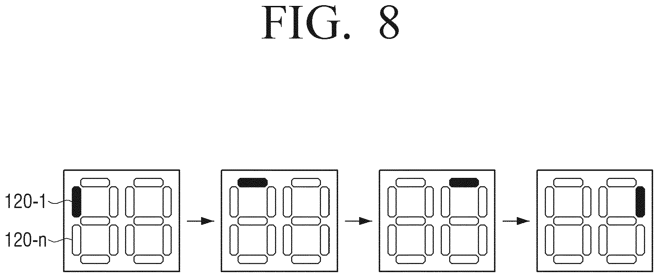

FIG. 8 illustrates a sequential lighting method according to still another embodiment of the disclosure, and the processor 130 may turn on the plurality of LEDs 120-1 to 120-n sequentially as illustrated in FIG. 8 while waiting for a recognition result from the server 200.

FIGS. 6 to 8 are merely examples, and it is possible to control the plurality of LEDs 120-1 to 120-n by a different method. For example, the processor 130 may perform control such that the entire plurality of LEDs 120-1 to 120-n are flickered while waiting for a recognition result from the server 200.

Meanwhile, in the aforementioned example, it was described that voice recognition is performed at the server 200, but it is also possible that the voice recognition function is performed at the home appliance 100. In this case, the processor 130 may also control the at least one LED 120-1 to 120-n to display that the voice is being recognized while the voice signal is being processed at the home appliance 100.

As another example, recognition of some voices may be performed at the home appliance 100, and recognition of other voices may be performed at the server 200. For example, the home appliance 100 may recognize a call word (a trigger keyword) in an inputted voice, and when a call word is recognized, the home appliance 100 may initiate a voice recognition mode (a prepared state to receive input of a voice). Also, the home appliance 100 may transmit a voice inputted during the voice recognition mode (a state of voice recognition) to the server 200. If a voice is not inputted for a time period greater than or equal to a predetermined time period after initiation of the voice recognition mode, the home appliance 100 may release the voice recognition mode.

According to a method of initiating a voice recognition mode by using a call word as above, voice recognition may be performed only for a voice that a user uttered with an intention of voice recognition, that is, a voice that a user uttered after uttering a call word. Accordingly, efficiency in voice recognition can be increased.

A call word is for executing a voice recognition mode, and for example, it may consist of one word or a short sentence such as "Bixby," "Hi, washing machine," "Hi, oven," "Hi, air conditioner," etc.

Meanwhile, it is possible that recognition of a call word is performed at the home appliance 100, and it is also possible that recognition of a call word is performed at the server 200. In this case, if it is determined that a call word is included in a voice signal received from the home appliance 100, the server 200 performs voice recognition for a voice afterward.

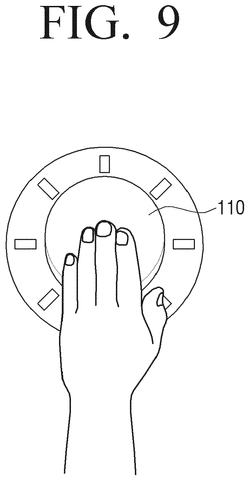

Other than a method of uttering a call word, according to another embodiment of the disclosure, it is possible that a voice recognition mode is initiated by a user manipulation for the manipulation member provided on the home appliance. An example in this regard will be described with reference to FIG. 9.

FIG. 9 is a diagram for illustrating an initiating method for a voice recognition mode according to an embodiment of the disclosure.

Referring to FIG. 9, the manipulation member 110 in the form of a jog wheel is a form that can receive a push input. That is, the manipulation member 110 in the form of a jog wheel may receive not only a rotation input but also a push input like a button. As illustrated in FIG. 9, if a user pushes the manipulation member 110, the processor 130 may initiate a voice recognition mode. If there is no voice input during a predetermined time period after initiation of the voice recognition mode, the voice recognition mode may be released automatically. Alternatively, it is possible that the voice recognition mode is released manually, and for example, if a user pushes the manipulation member 110 one more time, the voice recognition mode may be released.

In case a user utters a call word for initiating the voice recognition mode, there may be a case wherein misrecognition occurs. If such a circumstance is repeated several times, the user gets to hesitate to use a voice recognition service. If a method of initiating the voice recognition mode by pushing a specific button of the manipulation member 110 is used as illustrated in FIG. 9 in addition to uttering a call word, a user may be able to access a voice recognition service more easily.

If the voice recognition mode is initiated, the processor 130 may control the at least one LED 120-1 to 120-n to indicate that the voice recognition mode was initiated.

In this case, the processor 130 may control the at least one LED 120-1 to 120-n to indicate that the voice recognition mode was initiated by a lighting method different from a lighting method indicating that a voice is being recognized. A lighting method may be determined as at least one of the time of light emission, the number of LEDs emitting light, the color of the emitted light, the order of light emission, etc.

According to an embodiment of the disclosure, the processor 130 may turn on the at least one LED 120-1 to 120-n sequentially as illustrated in FIGS. 6 to 8 for indicating that the voice recognition mode was initiated or an input voice is being recognized. In this case, in the case of indicating that the voice recognition mode was initiated, the processor 130 may turn on the at least one LED 120-1 to 120-n sequentially in yellow color, and when a voice is inputted afterwards and the voice is being recognized, the processor 130 may turn on the at least one LED 120-1 to 120-n sequentially in blue color.

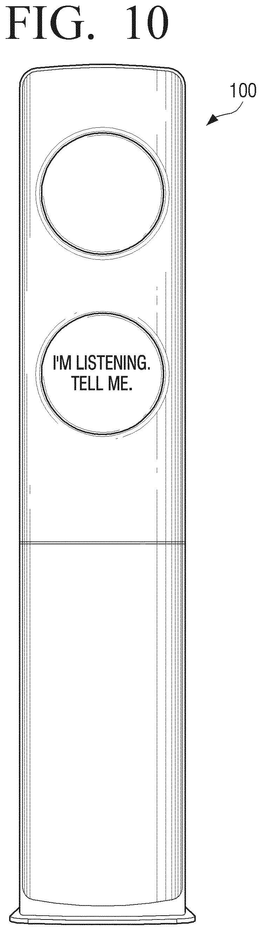

FIG. 10 is a diagram for illustrating a method for indicating that a voice recognition mode was initiated according to another embodiment of the disclosure.

FIG. 10 illustrates a case wherein the home appliance 100 is an air conditioner, and the processor 130 may control the at least one LED 120-1 to 120-n such that a phrase indicating that the voice recognition mode was initiated is displayed. Here, the at least one LED 120-1 to 120-n may be arranged to display characters. For example, as illustrated in FIG. 10, "I'm listening. Tell me" may be displayed. Meanwhile, the home appliance 100 may include an LCD panel, and it is possible to display information on the LCD panel.

According to another embodiment of the disclosure, the home appliance 100 may output a voice informing that the voice recognition mode was initiated through the speaker. For example, when the voice recognition mode is initiated, the processor 130 may output voices such as "What do you want?" and "Hello. Please tell me what you want" through the speaker of the home appliance 100.

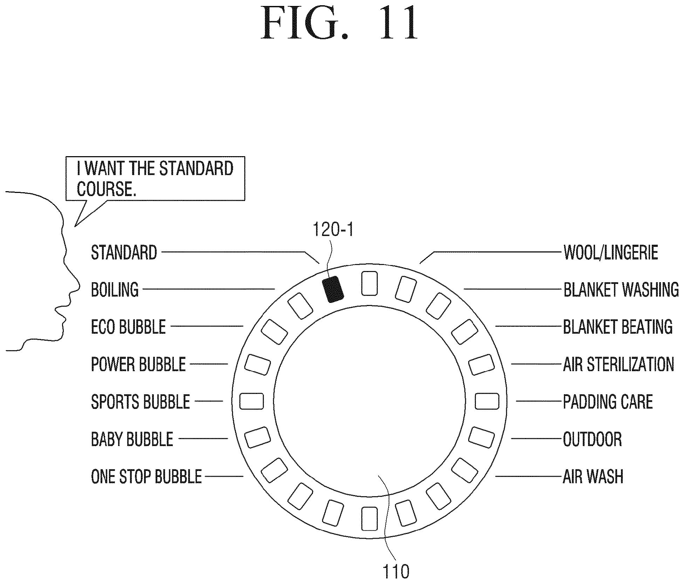

When the voice recognition mode is initiated and voice recognition for an inputted voice is completed, the processor 130 may control the at least one LED 120-1 to 120-n such that the LED corresponding to the result of voice recognition is turned on. An example in this regard is illustrated in FIG. 11.

FIG. 11 is a diagram illustrating an example wherein the home appliance 100 is a washing machine and a plurality of LEDs 120-1 to 120-n corresponding to each of a plurality of washing functions are arranged around the manipulation member 110.

Referring to FIG. 11, the home appliance 100 which is a washing machine provides various washing functions, and for example, the home appliance 100 may provide various washing functions such as standard, boiling, eco bubble, power bubble, sports bubble, baby bubble, one stop bubble, wool/lingerie washing, blanket washing, blanket beating, air sterilization, padding care, outdoor waterproof care, air wash, small amount/high speed washing, etc. Also, a plurality of LEDs 120-1 to 120-n corresponding to each washing function exist.

A user may rotate the manipulation member 110 and select a washing function (e.g., a washing course, a washing volume), or a user may utter a voice related to a desired washing function and select the washing function. For example, if a user says "I want the standard course," the processor 130 may turn on the plurality of LEDs 120-1 to 120-n sequentially as in FIG. 6 while voice recognition in this regard is being processed, and when voice recognition is completed, the first LED 120-1 that falls under the standard washing function corresponding to the result of voice recognition among the plurality of LEDs 120-1 to 120-n may be turned on. Then, the processor 130 may output a voice guidance such as "You selected the standard course. Starting washing" through the speaker of the home appliance 100.

Meanwhile, it is possible to adjust the volume of sound outputted from the speaker of the home appliance 100. According to an embodiment of the disclosure, it is possible to adjust the volume of sound according to a user manipulation through the manipulation member provided on the home appliance. As a specific example, the volume level may increase or decrease correspondingly to the number of times of pushing a specific button provided on the manipulation member. The processor 130 may turn on LEDs in a number corresponding to the volume level of the speaker to indicate the current volume level of the speaker.

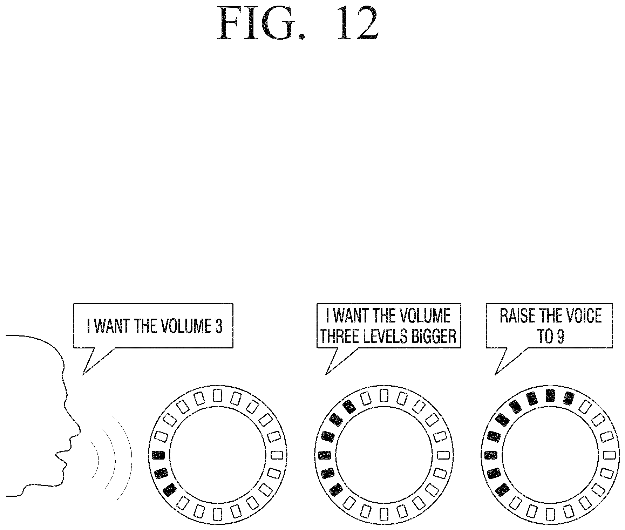

Meanwhile, the volume of the speaker may also be adjusted by a voice. Referring to FIG. 12, if a user says, for example, "I want the volume 3," the processor 130 may adjust the volume of the speaker to 3, and turn on three LEDs among the plurality of LEDs 120-1 to 120-n to indicate that the volume has been adjusted to 3. Also, the processor 130 may output a voice guidance which is "The volume has been set to 3." By a method wherein the number of LEDs turned on increases when the volume level increases and the number of LEDs turned on decreases when the volume level decreases, a feedback regarding the volume level may be given to a user.

According to the aforementioned embodiment, a user may set the volume to a desired size and receive a voice guidance, and may intuitively know the volume of sound and adjust it.

According to the disclosure, in the home appliance 100, a function that is simply matched with a voice uttered by a user is not selected, but a function may be recommended by identifying the meaning and intention of a voice uttered by a user. Also, the home appliance 100 is not just controlled by a mono-directional voice command from a user, but may be controlled through an interaction like conversing with a user. Hereinafter, explanation in this regard will be made with reference to specific examples.

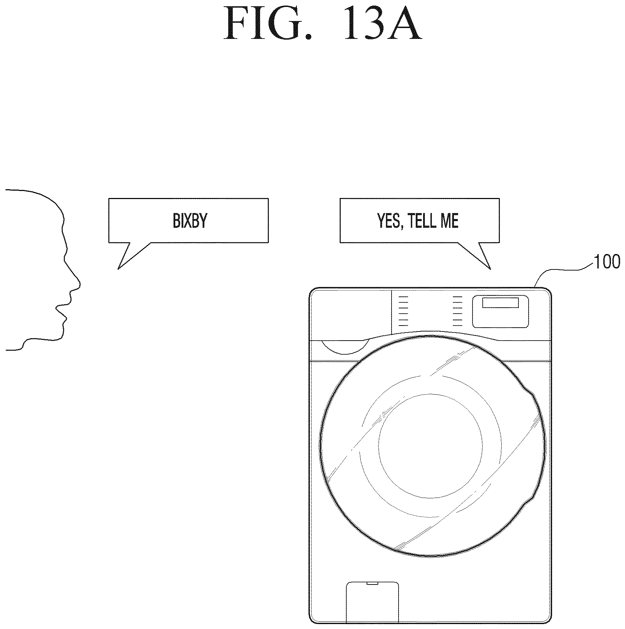

FIGS. 13A to 13D are for illustrating an embodiment wherein the home appliance 100 which is a washing machine determines a plurality of washing functions in response to a voice uttered by a user.

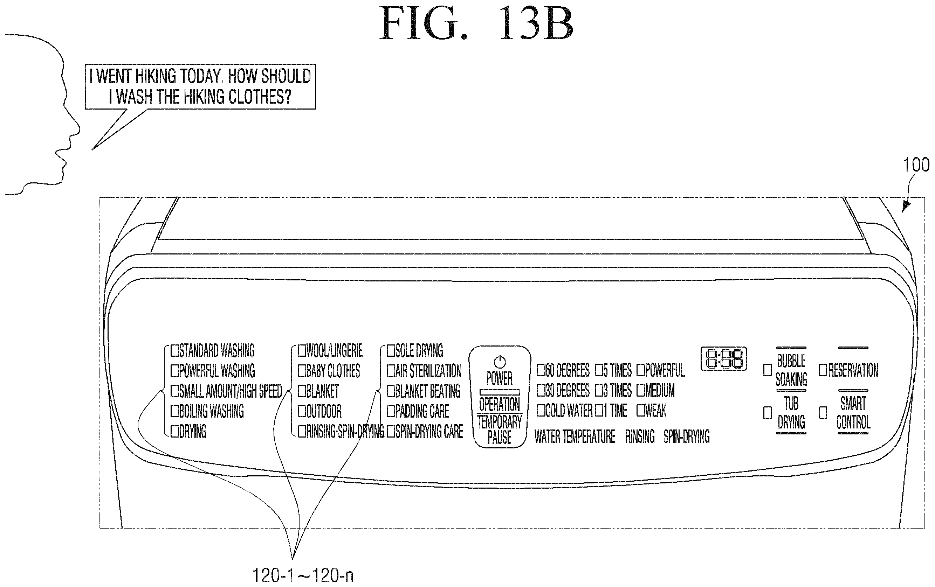

Referring to FIG. 13A, if a user utters, for example, "Bixby" as a call word, the home appliance 100 recognizes the call word (the home appliance 100 recognizes the call word by itself or recognizes the call word through the server 200), and informs the user that the voice recognition mode was initiated. For example, a voice response such as "Yes, please tell me" may be outputted. In response thereto, if a user utters a voice such as "I went hiking today. How should I wash the hiking clothes?" as illustrated in FIG. 13B, the home appliance 100 transmits a voice signal corresponding to the voice to the server 200 and waits for a result of voice recognition. While waiting, the plurality of LEDs 120-1 to 120-n of the home appliance 100 may be turned on while being moved by one cell. For example, the plurality of LEDs may be turned on while being moved by one cell by a method of turning on the LED corresponding to standard washing, and then turning on the LED corresponding to powerful washing. Through this, a user may recognize that his inquiry is being processed.

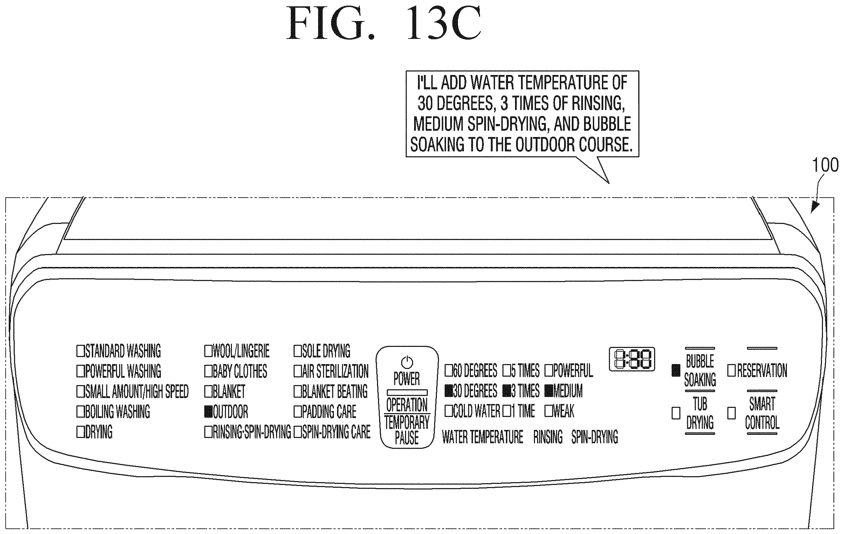

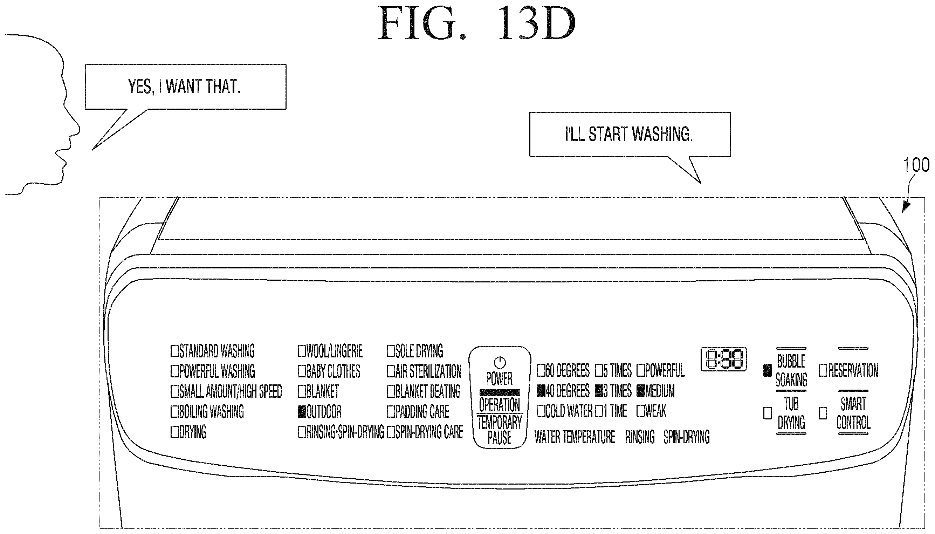

Afterwards, as illustrated in FIG. 13, the home appliance 100 may determine a plurality of washing functions based on the result of voice recognition received from the server 200 and recommend the functions to the user. For example, the home appliance 100 may recommend outdoor course, water temperature of 30 degrees, three times of rinsing, middle spin-drying, and bubble soaking functions to the user as a voice. In addition to that, the home appliance 100 may turn on LEDs corresponding to each of the recommended functions.

Then, as illustrated in FIG. 13D, if the user utters a voice confirming the recommended functions, e.g., "Yes, I want that," the home appliance 100 proceeds washing in accordance with the recommended functions. Meanwhile, it is possible that recognition of positive and negative meanings in the user's response is performed at the home appliance 100 without going through the server 200.

As can be seen above, even if a user does not know well about functions provided by the home appliance 100, if the user tells about his needs, the home appliance 100 may automatically search optimal functions and select the functions, and thus convenience in usage can be increased.

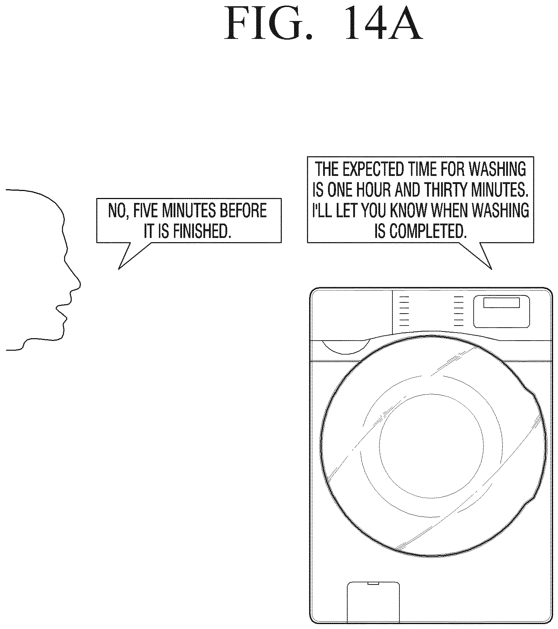

FIGS. 14A to 14B are diagrams for illustrating a method for reserving notification of completion of washing according to an embodiment of the disclosure.

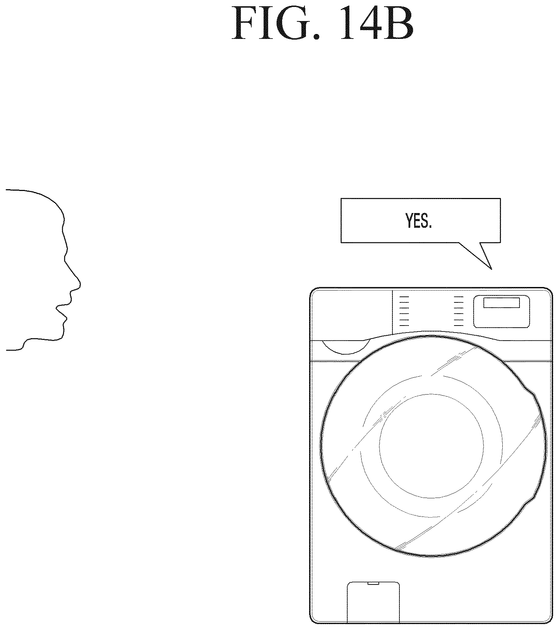

Referring to FIG. 14A, the home appliance 100 may perform washing, and notify a user about the time spent for washing as a voice. For example, a voice which is "The expected time for washing is one hour and thirty minutes. I'll let you know when washing is completed" may be outputted. In response thereto, the user may utter a positive or negative response. As an example of a negative response, if the user utters, for example, a voice which is "No, five minutes before it is finished" as illustrated in FIG. 14A, the home appliance 100 may set the reservation for notification of completion of washing as five minutes before completion, and may notify the user about completion of reservation by outputting a voice like "Yes" as illustrated in FIG. 14B. In addition to the above, if the user utters "I'll come back home at four in the afternoon, so please finish washing until then," the home appliance 100 may adjust the washing time so that washing can be completed at four in the afternoon.

In addition to the embodiment described with reference to FIGS. 13A to 14B, various scenarios are possible. Some scenarios in case the home appliance 100 is a washing machine are summarized in Table 1 below.

**[Table 1]**

| Function | Scenario (Bold type: a user voice, Italic type: the voice of the home appliance 100) |
|---|---|
| Setting an operation and a course | **"Wash them in the baby bubble course."** |
| | **"Add rinsing."** |
| Adding an operation | **"Add rinsing in the standard course."** |
| Reserving an operation | **"Wash them in the standard course at two."** |
| Checking the remaining time | **"How longer does it have to be done?"** |
| | *"Thirty minutes left."* |
| Explaining a course | **"What is a blanket washing course?"** |
| | *"It's a course of washing blankets or bedding, and* |
| | *washing can be done most effectively if you put in one* |
| | *kind of laundry in a weight smaller than or equal to 2.5kg. May I begin now?"* |
| Checking whether washing is possible | **"Wash the sneakers."** |
| | *"Sneakers cannot be washed! Please take them out.*" |
| Checking the history of tub washing | **"When was the last time the tub was washed?"** |
| | *"You washed it on the 15th of last month. Please wash* |
| | *the tub two weeks later. "* |
| Dialogue (Setting and reserving an operation and a course) | **"Finish the washing before I come home."** |
| | *"When will you be back?"* |
| | **"At six."** |
| | *"Okay, I got it. Don't worry."* |
| Recommending a course based on laundry | **"I put in baby clothes and towels."** |
| | "May I wash them in the baby care course?" |
| Recommending a course based on contaminants | **"I spilled coffee on my clothes. How should I wash it?"** |
| | *"You may run me in the cooking* & *dining course. May I begin washing?"* |
| Recommending a course based on a usage pattern | **"Wash them please."** |
| | *"May I operate in the course recently performed?* " |
| | **"No. My cycle No. 3."** |
| | *"I'll begin washing in my cycle No. 3.*" |
| Recommending washing based on a weather | *"It's raining a lot today. How about doing washing tomorrow? "* |
| | *"What kind of washing do you want? As it is raining today, I'll set the spin-drying basically at 1200 rpm. "* |
| Recommending washing based on identification of a user intention | **"I went hiking today."** |
| | *"I'll wash the clothes in the outdoor care course."* |
| Recommending tub washing | *"You washed the tub on the 1st of last month. May I wash the tub today?"* |
| Guiding how to deal with an error | *"Water is not being supplied. Please check whether the valve is locked."* |
| | *"The detergent is not being put in Please check whether* |
| | *there is detergent."* |
| | |
| | **"Is there any problem with the washing machine?"** |
| | *"The door is open. Please close the door."* |
| Guiding about reservation of an A/S | *"The detergent is not being put in. A problem occurred at the automatic detergent introducing device. It is necessary that a service engineer replaces the component.* |
| | *May I send a request for an A*/*S?* |
| OTN | *"The problem can be solved in terms of software. Would you like an update?"* |
| Buying a detergent | **"I ran out of detergent", "Buy some detergent."** |
| | *"Would you like the one you bought last time?"* |
| Recommending a course based on image recognition | *"You put in jeans, hooded t-shirts, cotton pants, and shirts. As jeans can be stained with another color, please wash them next time.* (the door opens)*"* |
| Recommending a course based on a calendar | *"You had a sports day today. I'll add one time of rinsing* |
| | *in the grimy stain course."* |
| Recommending a course based on a weather | *"Today, we have a yellow-dust warning. I'll add one time of rinsing in the outdoor course."* |
| Child lock distinguishing voices | **"Child lock."** (Parent) |
| Recommending buying detergent | *"It's about time that the detergent would run out. Buy new detergent."* |
| | *"The detergent is going to run out soon. May I buy some* |
| | *detergent?"* |
| | **"Yes."** |
| Checking whether washing is possible based on image recognition | *"You put in a waterproof cloth that cannot be washed! Please take it out!"* |

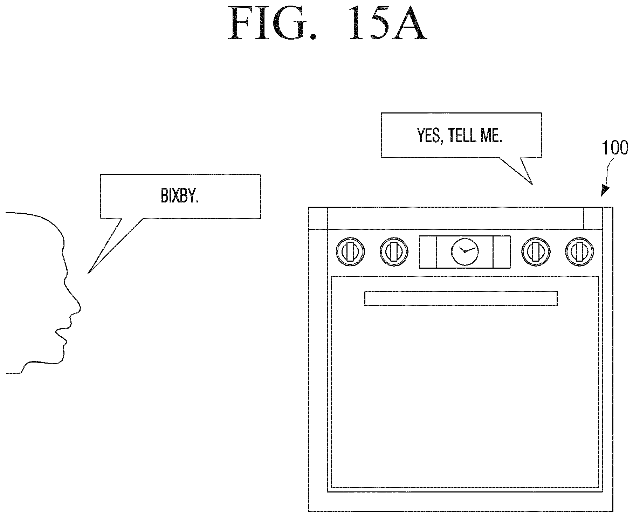

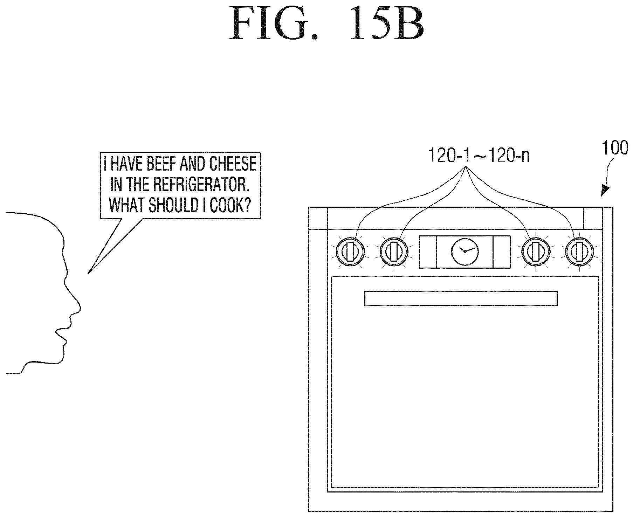

FIGS. 15A to 15H are for illustrating an embodiment wherein the home appliance 100 which is an oven suggests a cooking function in response to a voice uttered by a user. Referring to FIG. 15A, if a user utters a word, for example, "Bixby" as a call word, the home appliance 100 recognizes the call word, and informs the user that the voice recognition mode was initiated. Then, for example, a voice response such as "Yes, please tell me" may be outputted. Afterwards, as illustrated in FIG. 15B, if the user utters a voice such as "There are beef and cheese in the refrigerator. What should I cook?", the home appliance 100 transmits a voice signal corresponding to the voice to the server 200 and waits for a result of voice recognition. While waiting, the plurality of LEDs 120-1 to 120-n may be turned on so that a lightening wheel consisting of the plurality of LEDs 120-1 to 120-n of the home appliance 100 appears to rotate. Through this, the user may recognize that his inquiry is being processed.

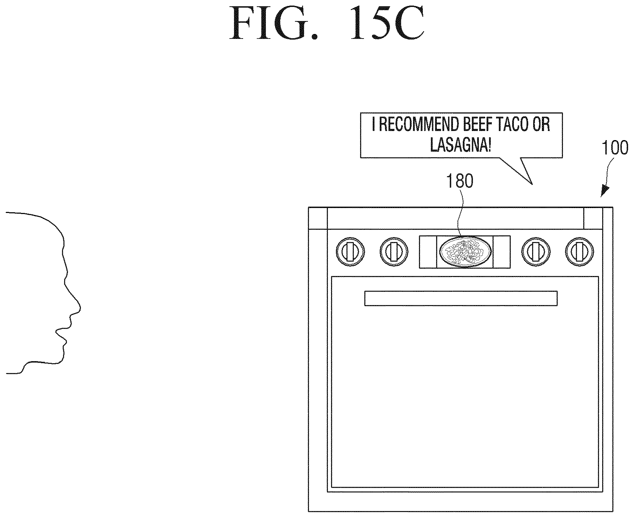

Afterwards, as illustrated in FIG. 15C, the home appliance 100 may recommend food based on the result of voice recognition received from the server 200. For example, the home appliance 100 may recommend beef taco or lasagna to the user. In addition to that, the home appliance 100 may display information corresponding to the recommended food through the display module 180 of the home appliance 100. For example, the home appliance 100 may display pictures of the recommended food through the display module 180 while converting the pictures at an interval of two seconds.

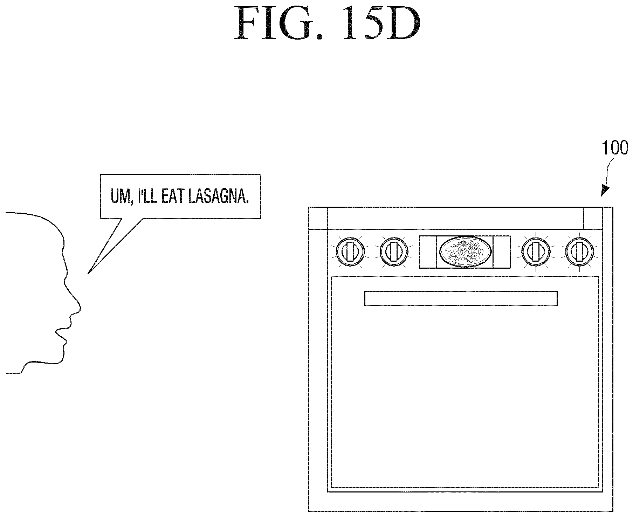

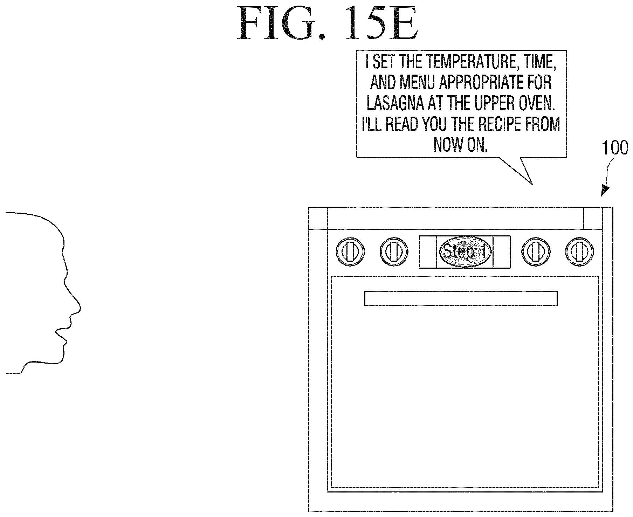

Then, as illustrated in FIG. 15D, if a user utters a voice confirming the recommended food, e.g., "Um, I'll eat lasagna," the home appliance 100 transmits the voice to the server 200 and waits for a result of voice recognition. During that time, the lightening wheel of the home appliance 100 is rotated. Afterwards, as a result of voice recognition, the home appliance 100 receives the recipe of lasagna from the server 200. Then, the home appliance 100 automatically selects a function appropriate for cooking lasagna, and turns on the LED corresponding to the selected function. For example, as illustrated in FIG. 15E, the home appliance 100 may output a voice which is "I set the temperature, time, and mode appropriate for lasagna at the upper oven. I'll read you the recipe from now on," and turn on the LEDs corresponding to the set temperature, time, or mode.

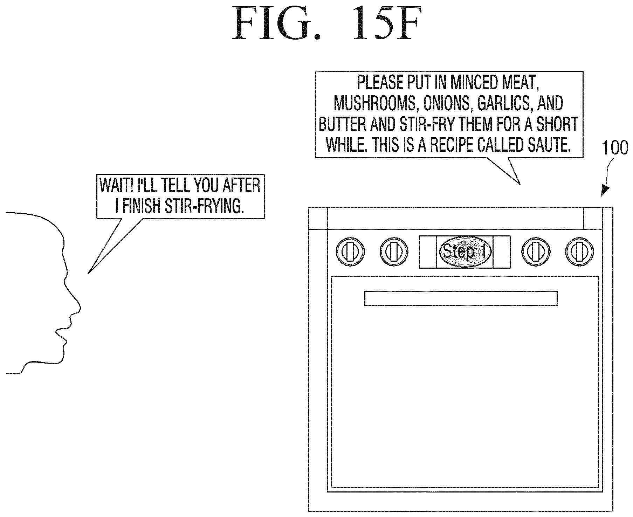

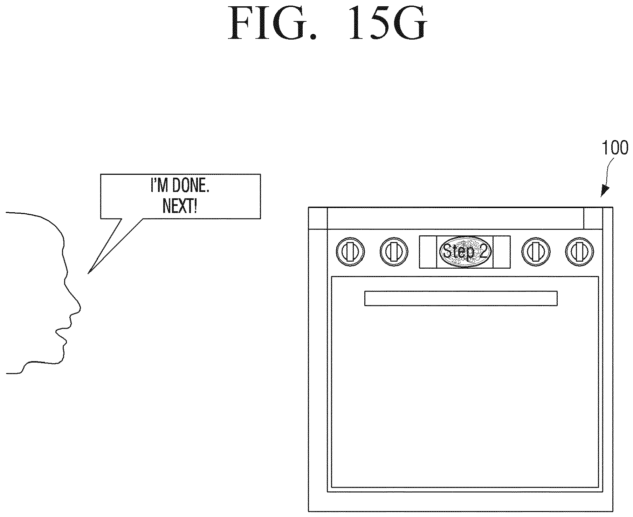

Then, the home appliance 100 may output the recipe of lasagna as a voice as illustrated in FIG. 15F. In this case, the home appliance 100 may output the recipe in each step to suit the cooking pace of the user. For example, if the user utters a voice such as "Wait! I'll tell you after I finish stir-frying," the home appliance 100 may stop reading the recipe for a short while. Then, when the user requests the next step as illustrated in FIG. 15G, the home appliance 100 may output a voice corresponding to the next step of the recipe. Other than the method of outputting a voice, it is also possible to provide information to the user through the display module 180.

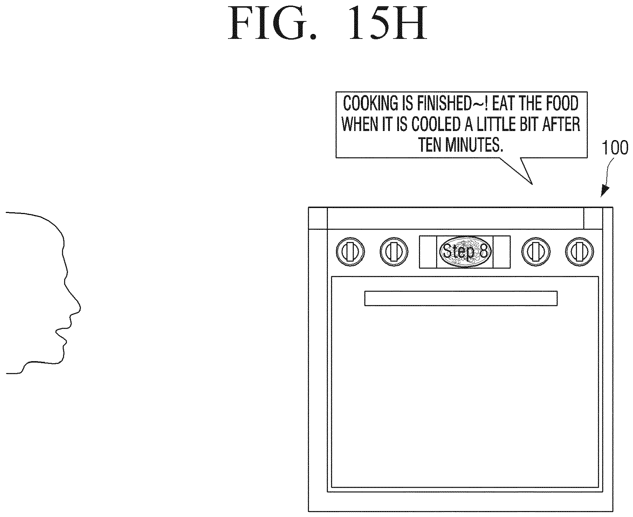

When the last step of cooking is completed, the home appliance 100 may inform the user that cooking is completed. For example, as illustrated in FIG. 15H, the home appliance 100 may output a voice which is "Cooking is finished. Eat the food when it is cooled a little bit after ten minutes."

In addition to the embodiment described with reference to FIGS. 15A to 15H, various scenarios are possible. Some scenarios in case the home appliance 100 is an oven are summarized in Table 2 below.

**[Table 2]**

| Function | Scenario (Bold type: a user voice, Italic type: the voice of the home appliance 100) |
|---|---|
| Setting an operation and a course | **"Start deodorization."** |
| | **"Start grilling for 30 minutes."** |
| | **"Start a steamed sweet potato (or smart cook No. 2)."** |
| | *"You selected a steamed sweet potato course. I'll start* |
| | *cooking with steam for 25 minutes."* |
| Adding an operation | **"Please preheat to 200 degrees."** |
| | **"Set the timer to 15 minutes."** |
| Reserving an operation | **"Start cooking after 20 minutes."** |
| | **"Start preheating at two."** |
| Checking the remaining time | **"How longer does the cooking have to be done?"** |
| | *"One minute and thirty seconds left."* |
| Explaining the smart cook course | **"What is a boiled pork slices course?"** |
| | *"It's a course of steaming 300 to 600g of pork with steam for 25 to 30 minutes. May I begin cooking?* |
| Setting an ingredient and a recipe | **"Medium rare beef sirloin steak."** |
| | *"Medium rare beef sirloin steak. I'll start cooking.* " |
| Photographing a picture and transmitting it | **"Can you send me the picture of the oven now to my cell phone?"** |
| | *"Yes. I sent the picture to your cell phone. "* |
| Dialogue (Setting and reserving an operation and a course) | **"Preheat when I come home from work."** |
| | *"When do you come home from work?"* |
| | **"Six."** |
| | *"To what temperature may I preheat?"* |
| | **"300 degrees."** |
| | *"I'll preheat to 300 degrees by six ten. "* |
| Recommending a course based on a food ingredient | **"Start well-being drying."** |
| | *"What kind of ingredient did you put in?"* |
| | **"Sweet potato."** |
| | *"I'll perform the well-being drying operation for three hours."* |
| Recommending a course based on a weight | **"Quick defrosting."** |
| | *"Is it meat or fish ?* " |
| | **"Meat."** |
| | *"What is the weight?"* |
| | **"600g."** |
| | *"I'll defrost it for three minutes.."* |
| Recommending a recipe based on a usage pattern | *"May I make the crust crispy like when you cooked roast chicken last time?"* |
| Recommending a recipe based on preference | *"You want your steak to be medium rare, right?"* |
| Guiding the recipe from the beginning to the end | **"At what temperature should I roast the chicken?"** |
| | *"You may roast the chicken at 200 degrees for 30 minutes. You need to turn it over when 20 minutes passed, so I' ll let you know then!"* |
| Guiding how to deal with an error | *"The internal temperature is too high. I'll turn off the power automatically."* |
| Guiding about reservation of an A/S | *"I can't read the value of the temperature sensor. It seems you need to replace the product. May I send a request for visit of an A*/*S engineer? "* |
| OTN | *"The problem can be solved in terms of software. Would* |
| | *you like an update?"* |
| Recommending a menu | **"What should I eat today?"** |
| | *"How about just warming up the pizza and eating it?"* |
| Recommending a ecipe based on a region | *"You should eat roast turkey on Thanksgiving day."* (U.S.) |
| | *"I'll cook you Schweinebraten.* " (Germany) |
| Recommending a recipe based on a calendar | *"How about mac and cheese for the party this evening? "* |
| Recommending a recipe in association with a refrigerator | *"You newly bought some eggs and mushrooms yesterday.* |
| | *How about an omelet for breakfast? "* |
| | *"You must eat the salmon by today. How about roast salmon for dinner?"* |
| Child lock distinguishing voices | **"Child lock."** (Parent) |
| Setting the cooking time based on weight measurement or image recognition | *"I'll start cooking a chicken steak for one person. Please wait just for ten minutes. "* |
| | *"As the steak is thick I'll lengthen the cooking time a little bit."* |
| Checking the cooking container and utensils based on image recognition | *"You can't use a heat-resisting plastic container in the oven* |
| | *mode. "* |
| | *"Please remove the aluminum foil in the range mode.* " |
| Guiding about usage of a grill | *"You can't use a grill in the range mode.* " |
| Notifying about burning in advance | *"It seems that the food is going to burn. May I stop cooking?"* |
| Notifying about burning | *"The food is burning. I'll turn off the power automatically."* |

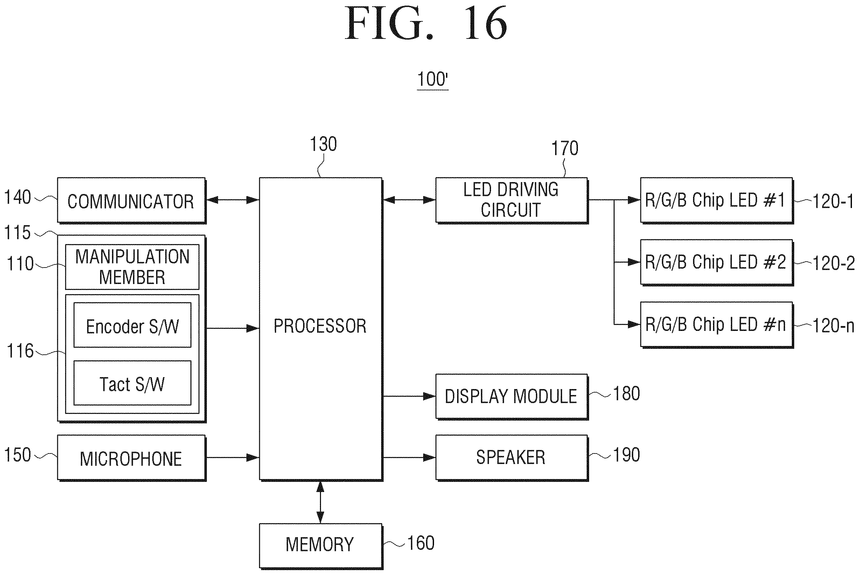

FIG. 16 is a block diagram for illustrating a configuration of a home appliance 100' according to another embodiment of the disclosure. Among the components in FIG. 16, there are parts overlapping with the components described in FIG. 1. Accordingly, the contents described through FIG. 1 can be applied to the description regarding FIG. 16 though they may be omitted below. Referring to FIG. 16, the home appliance 100' includes a manipulation module 115, a plurality of LEDs 120-1 to 120-n, a processor 130, a communicator 140, a microphone 150, a memory 160, an LED driving circuit 170, a display module 180, and a speaker 190.

The communicator 140 is a component for performing communication with an external device such as the server 200. As an example, the communicator 140 may be connected with an external device through, for example, a local area network (LAN) or an Internet network. Also, it may perform communication with an external device by a wireless communication method (e.g., wireless communication such as Z-wave, 4LoWPAN, RFID, LTE D2D, BLE, GPRS, Weightless, Edge Zigbee, ANT+, NFC, IrDA, DECT, WLAN, Bluetooth, Wi-Fi, Wi-Fi Direct, GSM, UMTS, LTE, and WiBRO). In addition, the communicator 140 may include various communication chips such as a Wi-Fi chip, a Bluetooth chip, an NFC chip, and a wireless communication chip.

In case a microphone 150 is not provided on the home appliance 100', the home appliance 100' may receive a voice signal corresponding to a voice inputted through a microphone of an external device through the communicator 140.

The processor 130 may transmit a voice signal corresponding to a voice inputted through a microphone 150 or a microphone of an external device to the server 200 through the communicator 140. Then, the server 200 may transmit a result of voice recognition performed for the received voice signal, and the result of voice recognition may be received through the communicator 140.

Meanwhile, a voice signal corresponding to a voice inputted through a microphone of an external device may be transmitted to the server 200 through another device which is not the home appliance 100 or the external device may directly transmit the voice signal to the server 200, and the home appliance 100 may be implemented in the form of receiving only a result of voice recognition from the server 200. Also, it is possible that the server 200 does not transmit a result of voice recognition to the home appliance 100 but to the external device, and the external device controls the home appliance 100 according to the result of voice recognition.

The microphone 150 may receive a voice uttered by a user, and generate a voice signal corresponding to the received voice. Also, the microphone 150 may be implemented as an integrated type with the home appliance 100 or separated. The separated microphone 150 may be electronically connected with the home appliance 100.

When a user voice is inputted through the microphone 150, the processor 130 may control the plurality of LEDs 120-1 to 120-n to indicate that the inputted voice is being recognized.

According to an embodiment of the disclosure, the microphone 150 may be activated (the power may be supplied) only when there is a predetermined event for saving power. For example, if a specific button of the manipulation member 110 is pushed, the microphone may be activated, and if there is no voice input during a predetermined time period after the microphone is activated, the microphone 150 may be inactivated.

The manipulation module 115 may include a manipulation member 110 for receiving a physical manipulation from a user, and a software module 116 interpreting an input through the manipulation member 110. In case the manipulation member 110 is a jog wheel, if an input by which a user rotates the jog wheel is inputted through the manipulation member 110, rotation information through an encoder S/W is received by the processor 130. Meanwhile, if a user manipulation of pushing the button of the manipulation member 110 is inputted, information on pushing of the button through a tack S/W is received by the processor 130. Based on such information, the processor 130 may control the other components.

The speaker 190 is a component for outputting sounds, and may output various sounds related to the states of the home appliance 100. For example, in case the home appliance 100 is in an error state, the speaker 190 may output a strong beep sound, and in case a specific operation of the home appliance 100 is completed (e.g., completion of washing), the speaker 190 may output a sound for notifying this.

The processor 130 may output a voice guidance corresponding to a result of voice recognition through the speaker 190.

The display module 180 is a component for displaying various information, and may include, for example, a display such as a liquid crystal display (LCD), organic light emitting diodes (OLEDs), etc.

Also, the display module 180 may display information on the states of the home appliance 100. For example, the display module 180 may display a communicative connection state of the home appliance 100. For example, in case the home appliance 100 is connected to a network through wireless fidelity (Wi-Fi), a Wi-Fi icon may be displayed through the display module 180. Meanwhile, if the home appliance 100 is connected to another device through Bluetooth, a Bluetooth icon may be displayed through the display module 180.

Instead of outputting a voice guidance corresponding to a result of voice recognition through the speaker 190, a visual guidance corresponding to a result of voice recognition may be displayed through the display module 180. Alternatively, it is possible to provide a voice guidance and a visual guidance simultaneously by using the speaker 190 and the display module 180.

The memory 160 may store various kinds of programs and data necessary for the operations of the home appliance 100.

The memory 160 may be implemented as a non-volatile memory, a volatile memory, a flash-memory, a hard disk drive (HDD) or a solid state drive (SDD), etc. Meanwhile, the memory 160 may be implemented not only as a storage medium inside the home appliance 100, but also as an external storage medium, for example, a micro SD card, a USB memory, or a web server through a network, etc.

User voices, manipulations by the manipulation member 110, or the setting values of the functions of the home appliance 100 automatically selected by the home appliance 100 may be stored in the memory 160.

In the memory 160, volume setting values may be stored. For example, in case a user adjusts a volute with a voice as described with reference to FIG. 12, the last volume setting value may be stored in the memory 160.

Also, in the memory 160, usage history of the home appliance 100 may be stored. For example, in case the home appliance 100 is a washing machine, information on the washing course used may be stored in the memory 160. Afterwards, if a voice "Wash them, please" is inputted from a user, the processor 130 may automatically select a washing course often used based on the usage history stored in the memory 160 and perform washing.

Also, in case the home appliance 100 is an oven, cooking data may be stored in the memory 160. The cooking data may include information on cooking types, cooking temperatures, and cooking time, and may also include information on cooking orders. A user may select a desired cooking mode through the manipulation member 110, and the processor 130 may perform cooking based on cooking data corresponding to the selected cooking mode.

The LED driving circuit 170 may be implemented as an LED driver integrated circuit, and may guide a result of a voice command and the state and the operation of the home appliance 100 through the plurality of LEDs 120-1 to 120-n according to control of the processor 130. Also, the LED driving circuit 170 may implement various colors through adjustment of combination of colors of R/G/B chip LEDs included in each of the plurality of LEDs 120-1 to 120-n.

The processor 130 may perform the functions of controlling the overall operations of the home appliance 100 and flow of signals among internal components of the home appliance 100, and processing data. Also, the processor 130 may be implemented as a CPU, an ASIC, and an SoC. According to an embodiment of the disclosure, a separate processor processing voice recognition may be provided.

In addition, the processor 130 may access the memory 160, and perform various operations by using various kinds of programs, contents, data, etc. stored in the memory 160.

In particular, the processor 130 may transmit a voice signal corresponding to an inputted voice to the server 200 through the communicator 140 and receive a result of voice recognition from the server 200.

When an error occurs in the home appliance 100, the processor 130 may control the plurality of LEDs 120-1 to 120-n to display an error occurring state. For example, the home appliance 100 may perform a self-diagnosis function. While performing a self-diagnosis function, the home appliance 100 may, for example, control each of the plurality of LEDs 120-1 to 120-n to emit light of a specific color (e.g., an orange color) sequentially for informing this to a user.

If it is determined that an error occurred as a result of performing a self-diagnosis function, the processor 130 may, for example, perform control such that light of a specific color (e.g., a red color) flickers from the entire plurality of LEDs 120-1 to 120-n. Then, the processor 130 transmits information on the error state to an external server, and the external server analyzes the error and derives a measure. While identifying what the error is like or analyzing a method for guiding a method for resolving the error as above, the processor 130 may control each of the plurality of LEDs 120-1 to 120-n to emit light of a specific color (e.g., a red color) sequentially. The external server may provide response information including a method for dealing with the error to the home appliance 100', and the home appliance 100' receives this and outputs a voice guidance for a method for dealing with the error through the speaker 190. For example, in case an error situation wherein the door of the home appliance 100' which is a washing machine is opened occurred, a voice guidance such as "The door is open. Please close the door" may be outputted through the speaker 190. Meanwhile, self-diagnosis as above may be performed periodically or when a specific function is performed.

As another example, while upgrading the software of the home appliance 100, the processor 130 may, for example, control each of the plurality of LEDs 120-1 to 120-n to emit light of a specific color (e.g., a yellow color) sequentially.

As described above, according to the disclosure, it may be figured out whether the voice recognition mode was initiated (i.e., whether a voice input is being waited for), whether a voice signal is being analyzed (i.e., whether a voice is being recognized), whether a response was derived, whether there is an error in the device, whether self-diagnosis is being made, whether the software is being upgraded, etc. through the color of the light of the plurality of light-emitting LEDs 120-1 to 120-n.

In case the home appliance 100' is a washing machine, the processor 130 may determine a washing course corresponding to a recognition result of a voice uttered by a user, and select a plurality of washing functions included in the determined washing course, and turn on a plurality of LEDs corresponding to the plurality of selected washing functions. Accordingly, even if a user does not manually select each of the plurality of washing functions, the plurality of washing functions may be selected only by speaking a specific sentence or a specific word. Thus, a user's convenience can be increased.

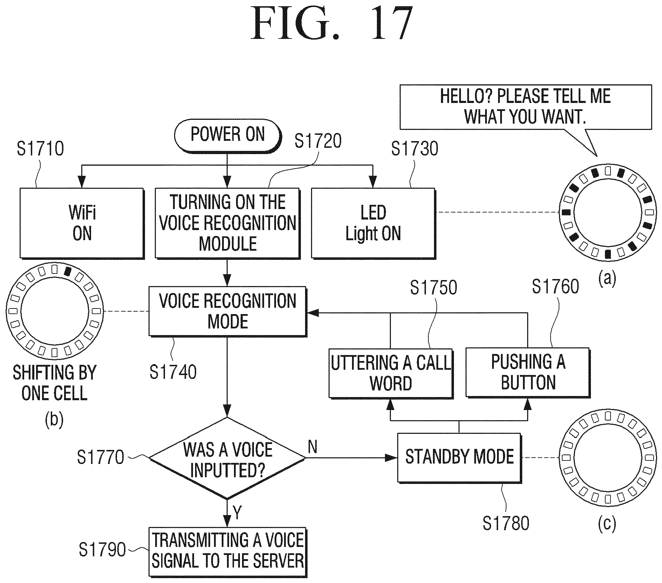

FIGS. 17 to 20 illustrate flow charts of a control method of the home appliance 100 (or the home appliance 100').

FIG. 17 illustrates a flow chart of a process of receiving a voice input at the home appliance 100. In FIG. 17, the light emitting states (a), (b), (c) of the plurality of LEDs in each step were also illustrated.

First, when the power of the home appliance 100 is turned on, the communicator is turned on at operation S1710, and the voice recognition module is turned on at operation S1720, and the plurality of light emitting LEDs may be turned on at operation S1730. In this case, for notifying that a voice service is available, the plurality of LEDs of the home appliance may, for example, emit light of rainbow colors, and a voice which is "Hello? Please tell me what you want" may be outputted through the speaker (a).

In case a call word is uttered at operation S1750 or a button of the manipulation member 110 (e.g., a button of the jog wheel) is pushed at operation S1760, the voice recognition mode is initiated at operation S1740. In a method of initiating the voice recognition mode by pushing a button of the manipulation member 110, the microphone may be in a turned-off state until a button of the manipulation member 110 is pushed, and the microphone may be turned on if a button of the manipulation member 110 is pushed. According to this embodiment, power consumption can be reduced more than in a case wherein the microphone is always turned on.

When the voice recognition mode is initiated, the plurality of LEDs may be turned on while being moved by one cell for notifying that the voice recognition mode was initiated (b).

After the voice recognition mode was initiated, the home appliance 100 determines whether a voice is inputted during a predetermined time period (e.g., ten seconds) at operation S1770. If a voice is not inputted, the mode is converted to a standby mode (i.e., release of the voice recognition mode) at operation S1780. In the standby mode, all of the plurality of LEDs may be turned off (c).

If a voice is inputted through the microphone, the home appliance 100 transmits a voice signal corresponding to the inputted voice to the server 200 at operation S1790.

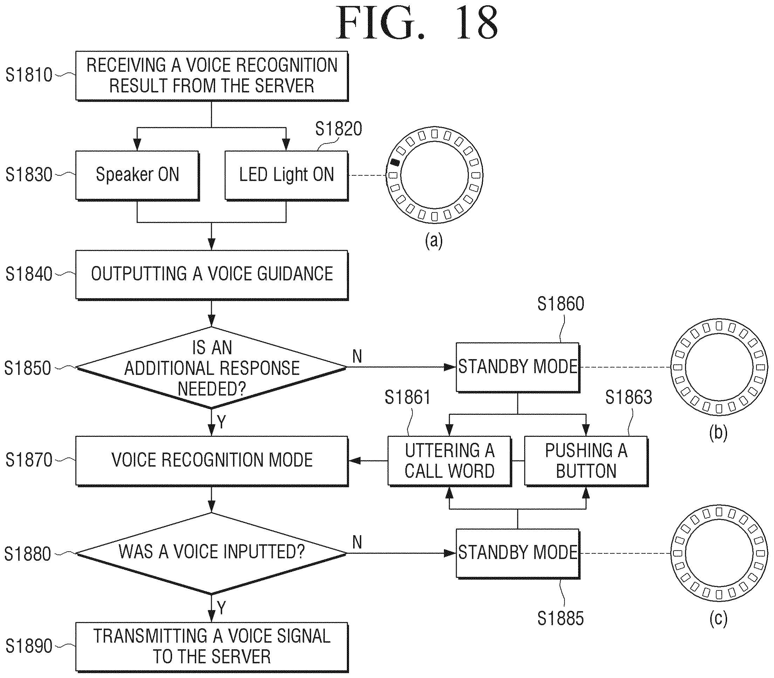

FIG. 18 is a flow chart for illustrating a process wherein the home appliance 100 transmits a received voice recognition result to a user.

When a voice recognition result is received from the server 200 at operation S1810, the home appliance 100 may turn on the LED corresponding to the voice recognition result among the plurality of LEDs 120-1 to 120-n at operation S1820. For example, as illustrated by (a), only a specific LED may be turned on. Meanwhile, if a voice signal is included in the voice recognition result (response information) received from the server 200, the home appliance 100 turns on the speaker at operation S1830, and outputs a voice guidance corresponding to the voice signal through the speaker at operation S1840.

Then, it is determined whether a response from a user is needed in response to the outputted voice guidance at operation S1850, and if it is a case wherein a response is not needed, the mode is converted into a standby mode (or the voice recognition mode is released) at operation S1860. In the standby mode, all of the plurality of LEDs may be turned off (b). If it is a case wherein a response is needed, the voice recognition mode is initiated at operation S1870. As an example of a case wherein a response is needed, there is a case wherein a voice guidance requests a response to a user such as "May I operate in the course performed most recently?"

After the voice recognition mode was initiated, the home appliance 100 determines whether a voice is inputted during a predetermined time period (e.g., ten seconds) at operation S1880. If a voice is not inputted, the mode is converted to a standby mode at operation S1885. In the standby mode, all of the plurality of LEDs may be turned off (c).

If a voice is inputted through the microphone, the home appliance 100 transmits a voice signal corresponding to the inputted voice to the server 200 at operation S1890.

In this embodiment, it was described that an external server processes voice recognition, but in actual implementation, a voice recognition algorithm may be stored in the home appliance 100, and the home appliance 100 may directly perform a voice recognition operation without using an external server.

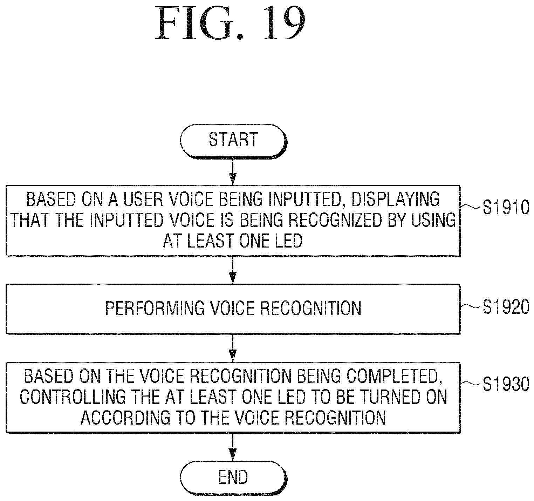

FIG. 19 is a flow chart for illustrating a control method for a home appliance including at least one LED for individually displaying each of selected states of at least one function according to an embodiment of the disclosure. The flow chart illustrated in FIG. 19 may consist of operations processed at the home appliances 100, 100' described in this specification. Accordingly, the contents described with respect to the home appliances 100, 100' may also be applied to the flow chart illustrated in FIG. 19, though they may be omitted below.

Referring to FIG. 19, when a user voice is inputted, the home appliance displays that the inputted voice is being recognized by using at least one LED at operation S1910.

Meanwhile, prior to operation S1910, a process of initiating the voice recognition mode may be requested first. Initiating the voice recognition mode means that the home appliance gets into a prepared state to receive input of a voice. In other words, the home appliance becomes a state of performing recognition processing for an inputted voice. The voice recognition mode may be initiated when a predetermined event occurs. For example, the voice recognition mode may be initiated when an event wherein a user voice including a predetermined call word (e.g., Bixby, Hi washing machine) is input or an event wherein a specific button of the manipulation member is selected occurs. When the voice recognition mode is initiated, the home appliance may indicate this by turning on at least one LED by a specific method.

Then, if a user voice is inputted during a state of being in the voice recognition mode, the home appliance may display that the inputted voice is being recognized by using at least one LED.

Meanwhile, the home appliance may indicate each state by using at least one LED by lighting methods different for each state of the home appliance. As an example, a lighting method indicating that a voice is being recognized and a lighting method indicating that the voice recognition mode was initiated may be different from each other.

A lighting method indicating that the voice recognition mode was initiated may be, for example, a method of turning on at least two LEDs among the plurality of LEDs sequentially. Also, a lighting method indicating that a voice is being recognized may be, for example, a method of flickering at least one LED. The opposite cases may also be possible.

The home appliance performs voice recognition for an inputted voice at operation S1920. The home appliance may perform voice recognition through a voice recognition module installed on itself, or it is possible that voice recognition is performed with help from an external server. In the latter case, the home appliance may transmit a voice signal corresponding to an inputted voice to an external server for voice recognition and receive a result of voice recognition from the external server. Then, the home appliance may control the at least one LED to indicate that the inputted voice is being recognized while waiting for the result of voice recognition from the external server.

Then, after voice recognition is completed, the home appliance controls the at least one LED to be turned on according to the voice recognition at operation S1930. For example, if the result of voice recognition indicates selection of a specific function, the LED corresponding to the specific function is turned on.

Then, the home appliance 100 may perform the selected specific function. Meanwhile, before the specific function is performed, a process of autonomously checking whether the function can be performed may be performed. Specifically, the home appliance 100 operates an autonomous check and if an error is detected, the home appliance 100 transmits information on the detected error to an external server. The external server may analyze the error and derive a measure in this regard and transmit it to the home appliance. Accordingly, the home appliance may provide guidance information for resolving an error situation to a user. If the error situation is resolved, performance of the specific function is initiated.

Meanwhile, the home appliance may control the at least one LED to indicate an error state, a self-diagnosis state, or a software upgrade state of the home appliance. Methods of indicating each state may be various. For example, colors of emitted light may vary for each state, and the at least one LED may be controlled by lighting methods in different patterns for each state.

According to the aforementioned various embodiments, even if a product does not have a display such as an LCD installed thereon, the product can provide a feedback for a voice control through lighting of LEDs.

Meanwhile, the aforementioned various embodiments may be implemented in a recording medium that can be read by a computer or an apparatus similar to a computer, by using software, hardware, or a combination thereof. According to implementation by hardware, the embodiments described in the disclosure may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or an electronic unit for performing various functions. Meanwhile, according to implementation by software, the embodiments such as procedures and functions described in the disclosure may be implemented as separate software modules. Each of the software modules may perform one or more functions and operations described in the disclosure.

Meanwhile, a control method of a home appliance according to the aforementioned various embodiments of the disclosure may be stored in a non-transitory readable medium. Such a non-transitory readable medium may be used while being installed on various devices.

A non-transitory readable medium refers to a medium that stores data semi-permanently, and is readable by machines, but not a medium that stores data for a short moment such as a register, a cache, and a memory. Specifically, programs for performing the aforementioned various methods may be provided while being stored in a non-transitory readable medium such as a CD, a DVD, a hard disk, a blue-ray disk, a USB, a memory card, a ROM and the like.

For example, a recording medium recording a program for executing a control method including the steps of, based on a user voice being inputted, displaying that the inputted voice is being recognized by using at least one LED included in a home appliance, performing voice recognition, and based on the voice recognition being completed, controlling the at least one LED so as to allow the at least one LED to be turned on according to the voice recognition may be provided.

Also, while preferred embodiments of the disclosure have been shown and described, the disclosure is not limited to the aforementioned specific embodiments, and it is apparent that various modifications can be made by those having ordinary skill in the art to which the disclosure belongs, without departing from the gist of the disclosure as claimed by the appended claims, and it is intended that such modifications are not to be interpreted independently from the technical idea or prospect of the disclosure.

## Claims

1. A home appliance comprising:
at least one light emitting diode (LED) for individually displaying each of selected states of at least one function provided by the home appliance; and
a processor for controlling, based on a user voice being inputted, the at least one LED so as to indicate that the inputted voice is being recognized, and based on the voice recognition being completed, controlling the at least one LED so as to allow the at least one LED to be turned on according to the voice recognition.

2. The home appliance of claim 1, further comprising:
a manipulation member for receiving selection of at least one function provided by the home appliance.

3. The home appliance of claim 1,
wherein the home appliance includes a plurality of LEDs including the at least one LED, and
the processor is configured to:
sequentially turn on at least two LEDs among the plurality of LEDs or flicker at least one LED among the plurality of LEDs so as to indicate that the inputted voice is being recognized.

4. The home appliance of claim 1,
wherein the processor is configured to:
control the at least one LED to indicate an error state, a self-diagnosis state, or a software upgrade state of the home appliance.

5. The home appliance of claim 1,
wherein the home appliance is a washing machine, and
the at least one LED individually displays a selected state of at least one washing function.

6. The home appliance of claim 2,
wherein the manipulation member is a jog wheel, and
the at least one LED is arranged in the form of surrounding the jog wheel.

7. The home appliance of claim 1, further comprising:
a communicator communicating with an external server for voice recognition, and
wherein the processor is configured to:
transmit a voice signal corresponding to the inputted voice to the external server through the communicator and receive a voice recognition result from the external server.

8. The home appliance of claim 7,
wherein the processor is configured to:
control the at least one LED to indicate that the inputted voice is being recognized while waiting for a voice recognition result from the external server.

9. The home appliance of claim 1,
wherein the processor is configured to:
based on a predetermined event occurring, initiate a voice recognition mode, and control the at least one LED to indicate that a voice recognition mode was initiated.

10. The home appliance of claim 9,
wherein the predetermined event is an event wherein a user voice including a predetermined call word is inputted or an event wherein a specific button provided on the home appliance is selected.

11. The home appliance of claim 9,
wherein the processor is configured to:
control the at least one LED to indicate that the voice recognition mode was initiated by a lighting method different from a lighting method indicating that a voice is being recognized.

12. The home appliance of claim 1, further comprising:
a microphone, and
wherein the processor is configured to:
based on a user voice being inputted through the microphone, control the at least one LED to indicate that the inputted voice is being recognized.

13. The home appliance of claim 1, further comprising:
a speaker, and
wherein the processor is configured to:
output voice guidance corresponding to the voice recognition through the speaker.

14. The home appliance of claim 13,
wherein the processor is configured to:
turn on LEDs in a number corresponding to the volume level of the speaker among the at least one LED.

15. A control method for a home appliance including at least one LED for individually displaying each of selected states of at least one function comprising:
based on a user voice being inputted, displaying that the inputted voice is being recognized by using the at least one LED;
performing voice recognition; and
based on the voice recognition being completed, controlling the at least one LED so as to allow the at least one LED to be turned on according to the voice recognition.
